# EUROPEAN PATENT APPLICATION

(11) **EP 2 088 545 A1**
(43) Date of publication of application: **12.08.2009**
(21) Application number: 08151103.2
(22) Date of filing: 06.02.2008
(51) Int. Cl.: G06Q 10/00

(54) **System for accounting for carbon emissions**

(71) Applicant: Access Accounting Limited, Stratford St. Mary Colchester Essex CO7 6LZ (GB)
(72) Inventor: Allsopp, Stuart, St Osyth, Essex CO16 8QW (GB)
(74) Representative: Simons, Alison

(57) **Abstract**

This invention relates to an apparatus and method for accounting for carbon emissions. The invention provides an apparatus and method for accounting for carbon comprising the steps of: receiving an input to select an account; receiving financial data relating to said account; storing said financial data in a ledger; in the event that the account is labelled as requiring accounting for carbon, receiving carbon usage data; and storing said carbon usage data in a carbon ledger. The invention also provides an apparatus and method for entering budget data for an account; and displaying data in dependence upon stored budget information and stored carbon usage data.

## Description

### BACKGROUND

### a. Field of the Invention

This invention relates to an apparatus and method for accounting for carbon emissions.

In today's world of high carbon usage and the associated world wide issues of global warming, individuals and organisations are being encouraged to account for their carbon usage, reduce their emissions and even offset their carbon consumption. It is likely that calculating this information and reporting it to the appropriate authorities will become a legal reporting requirement in some countries in the not too distant future.

The growing profile of green issues has resulted in many large organisations setting themselves targets for carbon-neutrality before any government targets are set. This necessitates that companies and their suppliers can set targets for, and then measure and report on carbon emissions generated by their business activities. Over time, driven first by customer demand and later by government targets and legislation, the requirement for accounting for carbon emissions will spread throughout many industries.

### SUMMARY OF THE INVENTION

In order to address the needs of organisations wishing to measure and report on their carbon emissions, the invention provides accounting for carbon emissions within a conventional accounting software product.

According to the invention and apparatus and method is provided in accordance with the appended claims.

The new functionality is integrated into existing accounting software and requires very little change to the existing workflow and data entry processes in order for an organisation to start tracking their carbon emission output.

The new functionality can be used by any member of staff who processes carbon related transactions such as electricity bills, records the quantities of green house gasses (GHG) produced via manufacture or anyone who submits expense claims.

The accounting for carbon software helps organisations to accurately track and report their business carbon footprint as well as raise awareness of the carbon emission topic by allowing staff to directly create their own carbon usage record when they enter their travel, mileage and expenses claims.

Accounting for carbon emissions is achieved by adding new options into existing menu structures, transaction entry and processing screens. Any account record can be marked as a carbon related account. Then whenever a carbon related transaction is entered for such an account, the system will automatically prompt for the quantities of carbon generating supply (e.g. kWh of Electricity) and then calculate the quantity of carbon emissions.

As a further option there is also a brand new transaction type - a carbon transaction. This new transaction enables users to enter historic carbon emissions (i.e. carbon emissions for a previous year) and custom carbon emissions which are not related to a purchase or staff expense. Providing this facility gives completeness to the carbon reporting, even though the transaction to be entered may not be directly related to a financial transaction.

The benefit that this delivers is that the business has a single application into which they can capture the carbon emission information, which in turn reduces the need for additional technologies and hardware. This approach is unique as no other accounting software offers such fully integrated functionality. For the business using the carbon records and transactions, the complexity and difficulty of collecting and reporting carbon emission information is alleviated.

In addition all the carbon conversion factors that a business will require in order to calculate the emissions are provided. These carbon usage factors are available from department for environment, food and rural affairs (DEFRA) via the Carbon Trust. preferably these carbon conversion factors can be updated by linking to a web site, which in turn guarantees accurate calculations and significant time saving for the business.

Carbon emission budgeting facilities are also provided, which mimic the financial budgets so that the business can produce carbon targets an monitor their performance against these targets. Carbon emissions may be budgeted in Kg of carbon produced, and reported in either Kg or Tonnes. Budgets can be created for each emission group and can also reflect any financial reporting structure by allowing the use of group and division headings.

### BRIEF DESCRIPTION OF THE DRAWINGS

The invention will now be described, by way of example only, with reference to the accompanying drawings, in which:
Figure 1 is an illustration of a conventional computer suitable for use in the present invention;
Figure 2 is an illustration of a conventional accounts data store;
Figure 3 shows the nominal ledger of Figure 2 in more detail;
Figure 4 is an illustration of an accounts data store which may be used for accounting for carbon emissions;
Figure 5 illustrates the carbon data store is Figure 4 in more detail;
Figures 6 to 9 show example screen shots for data entry and viewing;
Figure 10 is a flow chart illustrating a conventional purchase ledger transaction;
Figure 11 is a flow chart illustrating a purchase ledger transaction with accounting for carbon emissions enabled;
Figure 12 is a flow chart illustrating a conventional expenses transaction;
Figure 13 is a flow chart illustrating an expenses transaction with accounting for carbon emissions enabled;
Figure 14 is an example screen for entering an ad hoc carbon transaction according to the present invention;
Figure 15 is a flow chart illustrating an ad hoc carbon transaction according to the present invention; and
Figure 16 is an example screen shot showing a visual budget reporting display.

### DETAILED DESCRIPTION

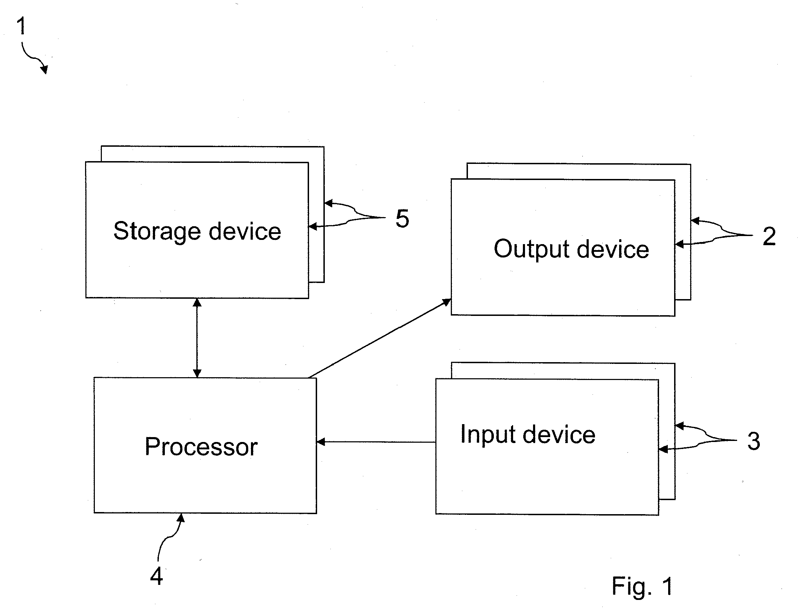

Referring to Figure 1 a conventional computer system 1 upon which an accounting system may be implemented comprises one or more input devices 3 such as a keyboard, mouse, audio input, scanner, optical character recognition, speech recognition, in fact any input device which allows a user to input data which can be sent to a processor 4. The processor 4 processes the input data and provides output to the user via one or more output devices 2, such as a display screen, audio output device, printer and the like. The system will have one or more data storage devices 5 such as magnetic or optical disks, tape drives and the like, for storing data input by the user, and data derived therefrom. A detailed description of data stores 20 suitable for use in the present invention follows. Data stores 20 may be stored on the same physical device as one another or different portions of the data stores 20 may be stored different physical storage devices 5.

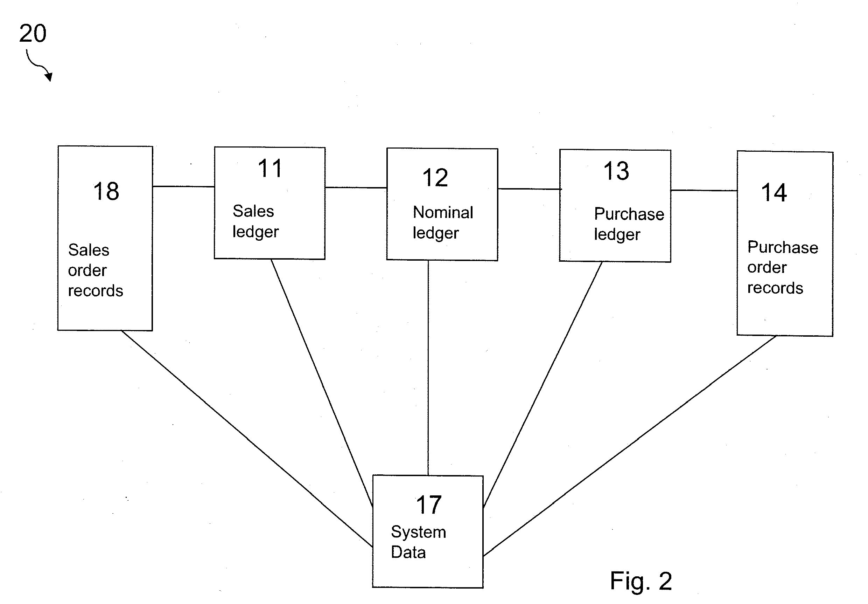

Referring now to Figure 2, a known accounting package for a company comprises a plurality of data stores. The data stores include a sales ledger 11, a nominal ledger 12 and a purchase ledger 13. All of the data stores have associated software modules in the processor 4 which provide pop-up screens to an output device 2 to allow data relating to transactions to be entered using an input device 3 via a transaction entry screen into the data stores; this process is usually referred to as posting a transaction.

The sales ledger 11 records accounts receivable and records accounting transactions dealing with the billing of customers who owe the company money for goods and services that have been provided to the customer. This is typically done by generating an invoice to an output device 2 and delivering it to the customer who is required to pay within an established timeframe.

The nominal ledger 12 (sometimes known as the general ledger) is the main accounting record of the company when using double-entry bookkeeping. It includes accounts for items such as current assets, fixed assets, liabilities, revenue and expense items, gains and losses.

The nominal ledger 12 provides a summary of all of the transactions that occur in the company. Financial reports, such as balance sheet and income statement may be derived from the nominal ledger 12.

The nominal ledger comprises a number of nominal account records, which are the individual account record which holds the financial information. For example an overhead account such as 'Electricity' would hold the total amount spent on electricity on a month by month and annual basis.

In a double-entry bookkeeping system, each transaction debits one account record and credits another account record in an equal amount, the double-entry bookkeeping system will ensure that the nominal ledger should always be in balance.

The purchase ledger 13 contains details of accounts of suppliers from whom the company has purchased goods or services (the creditors.) The purchase ledger 13 records information such as invoices received, credit notes received and payments sent.

Transactions are posted from the sales and purchase ledgers 11, 13 to the nominal ledger 12 using analysis codes. An analysis code is used as a shorthand for the double entry posting which enables users to post transactions more efficiently.

The accounting package provides a purchase order processing data store 14 for storing details relating to purchase orders, a sales order data store 18 for storing details relating to sales orders. The account package also uses system documents and tables 17 which may be used by any of the data stores in the system.

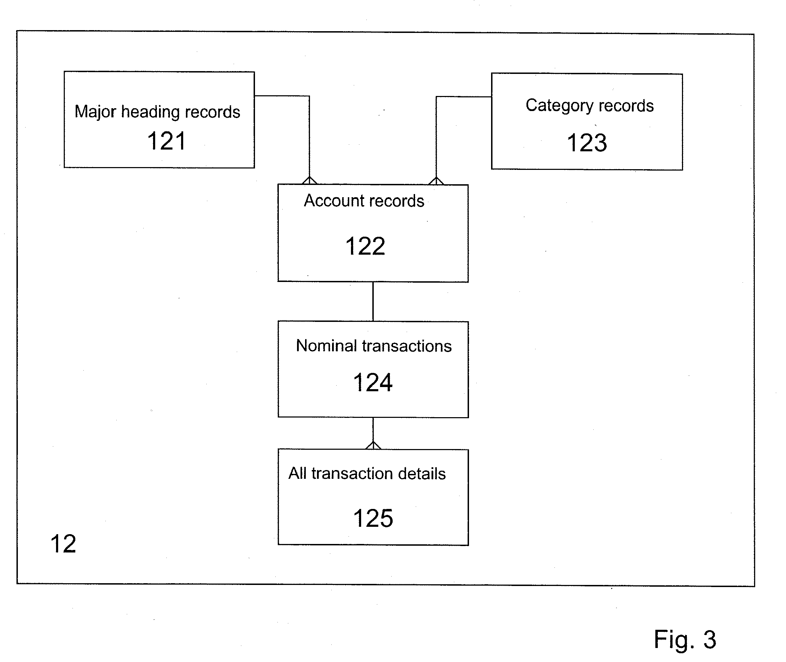

Referring now to Figure 3, the nominal ledger 12 comprises a major heading records data store 121, a nominal accounts records data store 122, a nominal category records data store 123, a nominal transactions data store 124 and a transactions details data store 125.

Describing these data stores in a little more detail, the major heading records data store 121 contains data assigning each account to a balance sheet or a profit and loss account. For financial reporting the definition of a balance sheet and profit and loss statement is fixed by the various accounting standards. Each nominal account that exists in a system must be assigned to either a balance sheet or to a profit and loss statement.

In the preferred embodiment of the invention there are twelve major headings in total, for example Code 1 = Income, Code 9 = Current Assets etc.

The nominal accounts records data store 122 stores the nominal accounts records. A nominal account record is the specific account where the financial information is stored. Typically it will have a code, description, currency, balance, turnover information, categories assigned to it, budgetary information and other settings such as whether it is a bank account. It is linked to other areas of the system via an analysis code and can be used in nominal analysis by way of the category codes.

In the preferred embodiment of the invention each nominal code can have up to eight categories. These are selected from lists which are stored in the nominal category records data store 123 which stores group and division categories as will be described later.

A journal is a transaction that is posted directly to the nominal ledger (i.e. no customer or supplier). The information held in the a nominal transactions data store 124 comprises any information posted on a journal. This includes the journal reference, date entered, year and period posted to, the journal type, options set on the journal entry which dictate its behaviour, currency information, the nominal codes that were posted to, values (Net VAT and Gross).

The transactions details data store 125. is the heart of the accounting system, where every detail line that is entered onto the system is eventually stored.

The information stored is extensive, as an example, the analysis code, quantities, prices and values, currency values, stock codes if relevant, project codes if relevant and links to the source transaction header (e.g. sales header contains the customer code, totals, etc) are all stored

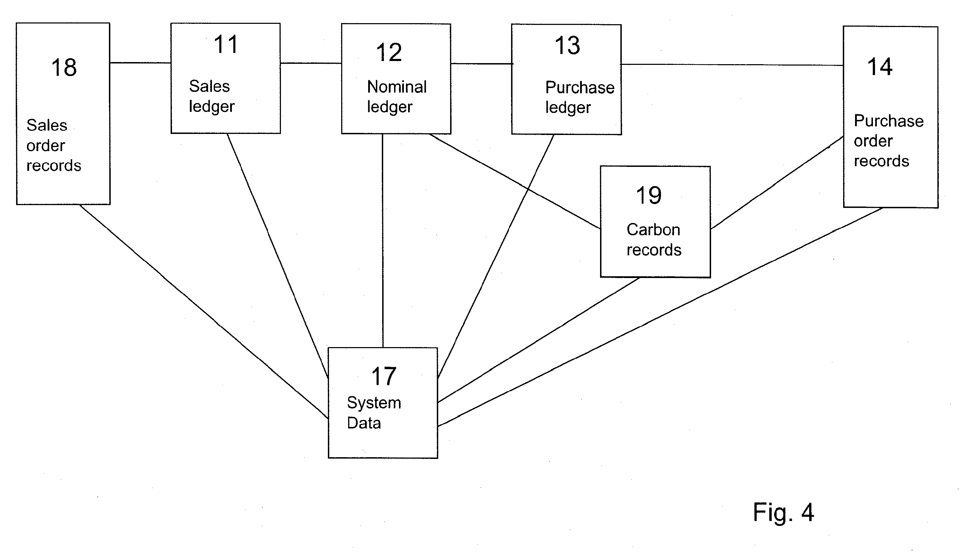

Figure 4 shows an improved accounting package data store including a carbon emission records store 19.

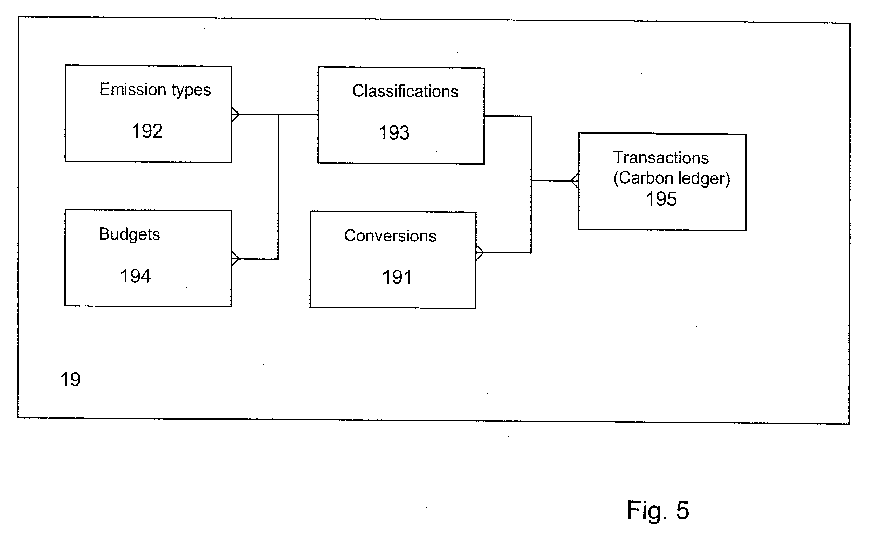

Referring now to Figure 5, the carbon emission records store 19 comprises a carbon conversion factor data store 191, a carbon emission types data store 192, a carbon classification data store 193, a carbon budgets data store 194 and a carbon transactions data store 195 also referred to herein as a carbon ledger, which will be described in more detail in the following description.

At least one new carbon field is required in the system documents and tables 17. Specifically a Boolean flag account_for_carbon is used to indicate whether accounting for carbon emissions is enabled.

The table beloww illustrates the new data fields that are used in a system wide data table:

| Field Name | Type | Description |
|---|---|---|
| ACCOUNT_FOR_CARBON | Boolean | Enable accounting for carbon emissions |
| CARBON_BY_GROUP | Boolean | Analyse carbon by group |
| CARBON_BY_DIVISION | Boolean | Analyse carbon by Division |

A nominal account analysis code in the account records 122 may have a group heading and/or a division heading which are used in analysis of the accounts. For example if a business had multiple sites there could be two electricity accounts - one for each site or 'group'. A division heading provides a second additional level of analysis which can be attached to a nominal account. For example each site may have multiple departments and it would be desirable to record the electricity consumption for each of the departments for each site. The subsidiary Boolean flags carbon_by_group and carbon_by_division allow analysis of carbon by group or by division to be enabled or disabled on a system wide basis.

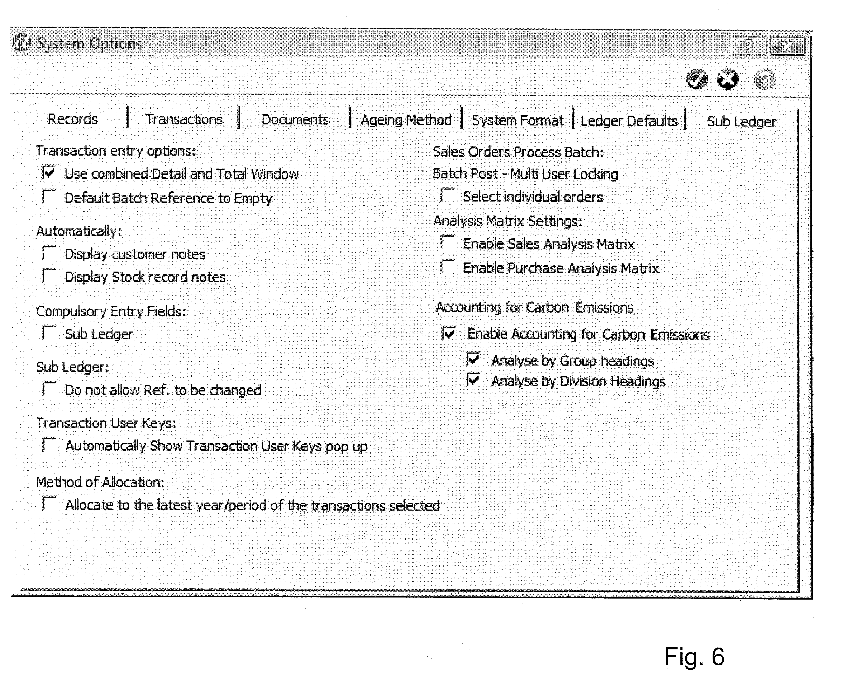

Figure 6 is an illustrative screen shot showing a data entry screen that can be used to enter data into carbon fields in the system wide data tables 17.

Further system wide data stored in the system data store 17 which is needed in order to account for carbon emissions comprises carbon units of measure which are held in a system wide text look up table:
The default units of measure used in the preferred embodiment of the invention are:

| Energy units: | kWh | Therms | MJ |
|---|---|---|---|
| Mass units: | Tonnes | Kg | |
| Volume units: | Litres | Cubic metres | |
| Distance units: | Miles | Km | |

| | | | |
|---|---|---|---|
| Note: 1 kWh = 3.6 MJ (megajoules) 1 Therm = 105.505585257348 MJ 1 Therm = 29.30710701583 kWh 1 Tonne = 1000 Kg 1 cubic metre = 1000 litres | | | |

Referring back now to Figure 5, the carbon emission types data store 192 will now be described in more detail.

The carbon emission types store 192 holds the following data:

| Field Name | Type | Length | Description |
|---|---|---|---|
| CGRP_PRIMARY | Integer | Long | Primary key. |
| CGRP_ID | Character | 2 | Emissions group ID |
| CGRP_DESCRIPTION | Character | 40 | Group description |

There are a number of different emissions groups and classifications within those groups which have been published by DEFRA tables. For example, these may be found at www.defra.com.

The emissions types used in the preferred embodiment of the invention are

| CGRP_ID | CGRP_DESCRIPTION |
|---|---|
| 01 | Fuel |
| 02 | Combined Heat and Power |
| 03 | Electricity |
| 04 | Greenhouse Gas Process Emissions |
| 05 | Passenger Transport |
| 06 | Bus and Rail Transport |
| 07 | Air Passenger transport |
| 08 | Freight Transport |
| 09 | Sundry Emissions |

| | |
|---|---|
| Note "Sundry Emissions" allows a user to define their own emissions for ad hoc reporting. | |

The classifications data store 193 links to the carbon emissions types store 191 via a many to one mapping and holds the following data:

| Field Name | Type | Length | Description |
|---|---|---|---|
| CCLS_PRIMARY | Integer | Long | Primary key. |
| CCLS_GROUP | Integer | Long | Links to emissions types 192 |
| CCLS_CLASS_ID | Character | 4 | Classification ID |
| CCLS_DESCRIPTION | Character | 40 | Classification Description |

As an example, Fuel might be classified as one of natural gas, gas oil, diesel or petrol and Passenger Transport might be classified as one of standard road transport petrol, standard road transport diesel, standard road transport compressed gas, standard road transport liquid petroleum, Petrol < 1.4, Petrol 1.4 - 2.0, petrol > 2 etc.

The carbon conversion data store 191 contains the following data:

| Field Name | Type | Length | Description |
|---|---|---|---|
| CCNV_PRIMARY | Integer | Long | Primary Key |
| CCNV_EFFECTIVE_DATE | Date | | Effective from date |
| CCNV_CLASS_LINK | Integer | Long | Links to classification type data 193 |
| CCNV_UOM_LINK | Integer | Long | Links to units of measure in system wide data store 17 |
| CCNV_CONVERSION_FACTOR | Number | 4dp | Conversion factor |
| CCNV_UPLIFT | Number | 2dp | Percentage uplift |

This carbon conversion data store 191 holds the fuel type, the different units that each fuel type can be measured in and an associated conversion factor. Each fuel type has a unique identifier (CCLS_CLASS_ID) and belongs to a fuel classification. The table is grouped by emissions type - e.g. Fuel, Passenger Transport, or Freight transport.

The carbon conversion data store 191 is capable of holding more than one set of calculations for each fuel type. The user enters an 'Effective from date' for each conversion. For some fuel types the user may additionally record a second conversion factor. A user can manually update the conversion factors in all sections of this table and is able to add new conversion records to Sundry Emissions as mentioned previously.

Some fuel types will also have an uplift which is applied to the carbon calculation. The conversion factor (CCNV_CONVERSION_FACTOR) is a numeric field which supports up to 4 decimal places. The uplift factor (CCNV_UPLIFT) is a percentage - i.e. if the uplift value is 109% then the carbon calculation is multiplied by 1.09 to obtain the uplifted value.

In the preferred embodiment of the invention the following default values are used in the carbon conversion data store 191.

| Fuel | Unit of Measure | Conversion Factor (kg CO2 per unit) |
|---|---|---|
| Natural Gas | kWh | 0.206 |
| | Therms | 6.023 |
| Gas Oil | Tonnes | 3190 |
| | kWh | 0.265 |
| | litres | 2.674 |
| Diesel | Tonnes | 3164 |
| | kWh | 0.263 |
| | litres | 2.630 |

For electricity consumption a conversion factor is provided for each year. This is accommodated via the facility to enter an effective from date.

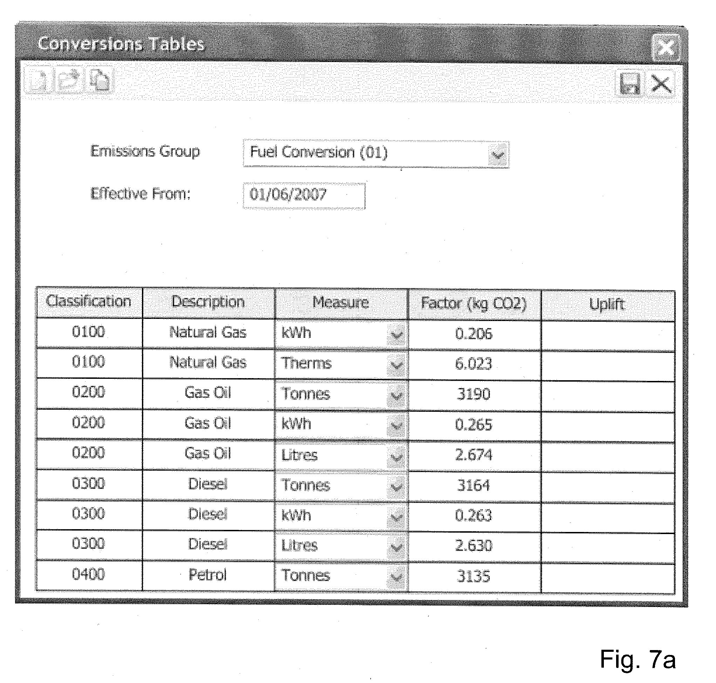

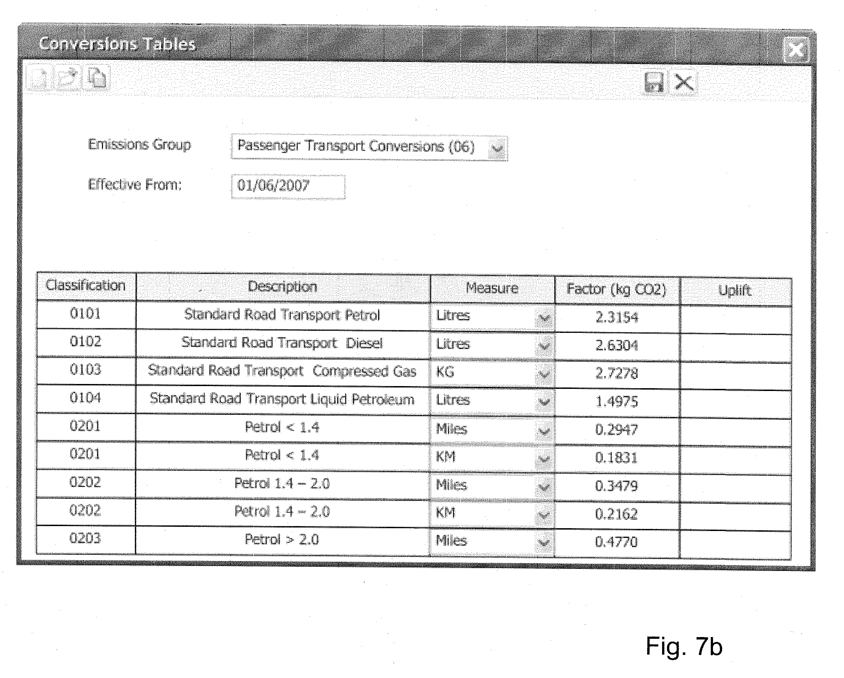

Figures 7a and 7b show example screen shots showing a view of data in a conversion data store 191. The user is also able to edit data in the data store 191 via similar data entry screens.

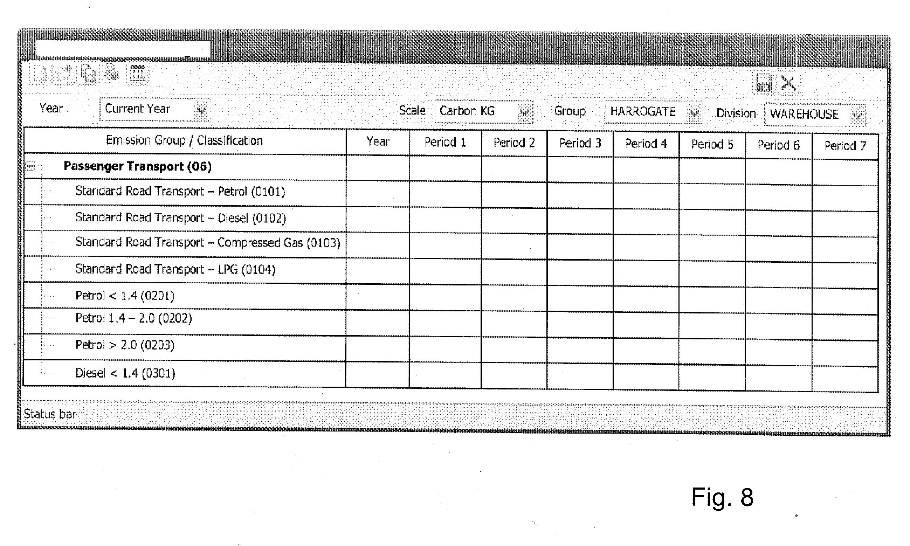

Moving on to the budget data store 194 (Figure 5) in order for businesses to monitor their carbon usage and to be able to report their performance, plan and strategise, they may enter carbon usage budgets. In the present invention, these budgets are enterable by year/period, by group/division heading for each emission type. Figure 8 is an example screen shot illustrating a screen a user may use to view or enter carbon budgeting data.

The carbon budgets data store 194 contains the following data

| Field Name | Type | Length | Description |
|---|---|---|---|
| CBDG_PRIMARY | Integer | Long | Primary Key |
| CBDG_CLASS | Integer | Long | Link to classification data store 193 |
| CBDG_GROUP_HEADING | Integer | Long | Link to group in category records 123 |
| CBDG_DIVISION_HEADING | Integer | Long | Link to division in category records 123 |
| CBDG_YEAR | Integer | Long | Budget Year (0 = Current, 1 = Next, -1 = Last Year, -2 to -9 = the 8 years prior to last year) |
| CBDG_PERIOD | Integer | Short | Period number |
| CBDG_CO2 | Number | 0dp | Budget value (Kg CO2) |

In order to account for carbon usage the user has a number of ways in which a carbon transaction can be recorded when the system wide accounting for carbon flag is enabled.

A carbon transaction can be recorded when a user is posting an invoice or a credit note to the purchase ledger 13.

Within the system a user has a choice as to whether they want to post live to the nominal ledger or whether they want to hold the transaction in a 'batch' and once all transactions for the day (given time period or other factor) have been entered - update the batch to the nominal ledger in one go. Carbon transactions can be recorded when processing purchase orders invoices or credit notes in batch

A VAT journal is an extension of a journal (described earlier) to record any VAT elements. VAT journals are separated in into Debit and Credit types. A debit VAT journal is one where the VAT will be posted as a Debit value on a VAT control account.

Therefore a typical debit VAT journal is an expenses journal. An employee incurs an expense which is subject to VAT and so this transaction is entered. Carbon transactions may also be posted when debiting a VAT journal on the nominal ledger and when entering an expenses transaction. Finally an ad-hoc carbon transaction might be recorded.

The following new fields are required in the account records store 122:

| Field Name | Type | Length | Description |
|---|---|---|---|
| N_CARBON_CODE | Character | 6 | Carbon group/classification code |
| N_ACCOUNT_FOR_CO2 | Boolean | | Account for CO2 flag |

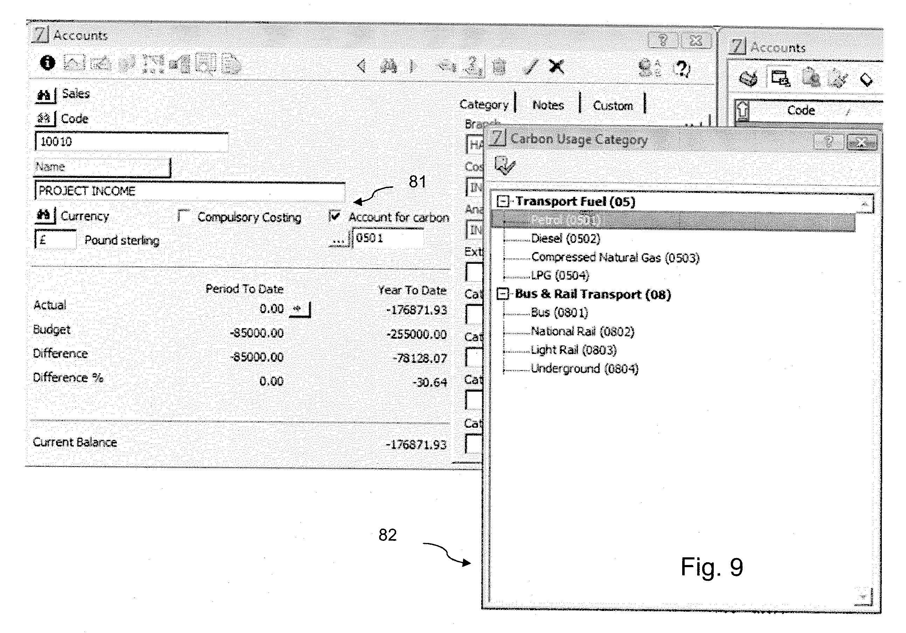

On the nominal account record entry screen shown in Figure 9 two additional fields will be visible to the user if the accounting for carbon functionality has been enabled at a system wide level

These are provided by a tick box 81 to say that this nominal account is subject to carbon transactions and a field showing the emission group/classification. If the tick box is selected then at least one emission group should be selected.

This set by the user drilling down and picking from a list 82. The list is grouped by an emission group identifier with all sub classifications shown beneath.

The user can select either the emissions group (referred to via a 2 character reference as described above) or the emissions group together with the classification (concatenated reference comprising a 2 and 4 character reference as described above).

Once a nominal analysis code has been flagged as account for carbon then any relevant transactions posted to that nominal analysis code must have a carbon entry made.

CTRN_DETAIL (in the table below) links to data for a purchase ledger, nominal ledger or purchase order transaction if appropriate.

The carbon transactions data store 195 contains the following data:

| Field Name | Type | Length | Description |
|---|---|---|---|
| CTRN_PRIMARY | Integer | Long | Primary key. |
| CTRN_TYPE | Character | 2 | 'PL', 'PO', 'NL', 'CT' or 'C' * |
| CTRN_DETAIL | Integer | Long | Links to transaction details |
| CTRN_BATCHED | Boolean | | Batched flag |
| CTRN_CLASS_LINK | Integer | Long | Links to classification data 193 |
| CTRN_GROUP_HEADING | Integer | Long | Link to group in category records 123 |
| CTRN_DIVISION_HEADING | Integer | Long | Link to division in category records 123 |
| CTRN_DATE | Date | | Consumption date |
| CTRN_YEAR | Character | 1 | Year |
| CTRN_PERIOD | Integer | Short | Period number |
| CTRN_QUANTITY | Number | QTYdp | Quantity |
| CTRN_CONVERSION | Number | 4dp | Conversion factor |
| CTRN_CO2 | Number | QTYdp | Kg CO2 |
| CTRN_NOTES | Character | 240 | Notes |

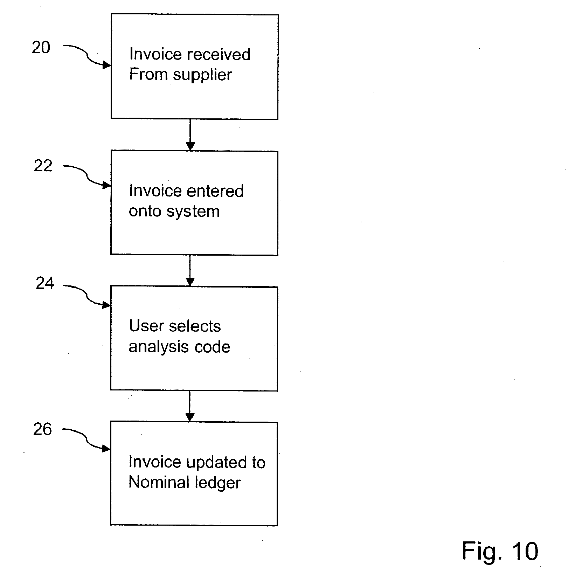

Figure 10 is a flow chart illustrating a conventional purchase ledger transaction. At step 20 an invoice is received from a supplier. At step 22 the invoice is entered using a transaction input screen into the purchase ledger 13. At step 24 an analysis code is selected and then at step 26 the appropriate nominal account in the nominal ledger 12 is updated.

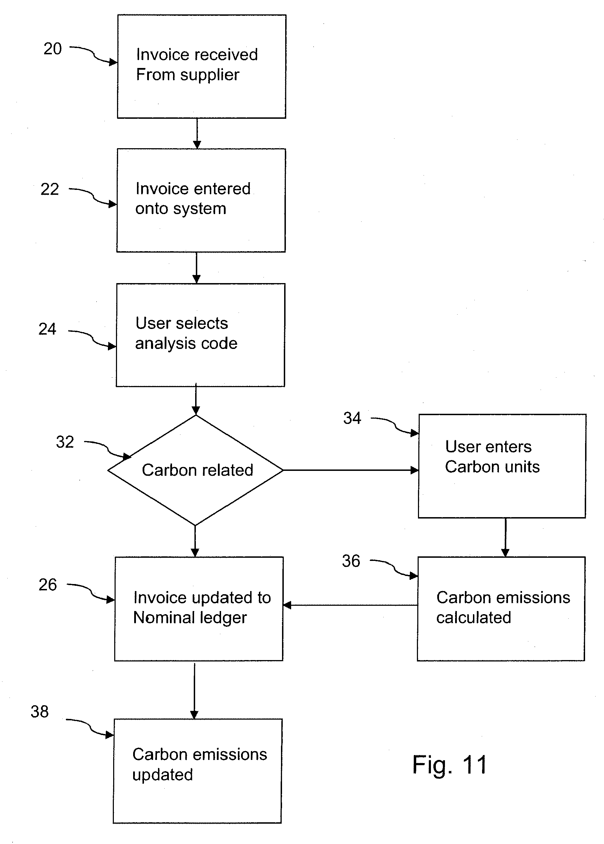

Figure 11 is a flow chart illustrating a purchase ledger transaction in the system of the present invention when the system wide account_for_carbon flag is enabled.

At step 20 an invoice is received from a supplier. At step 22 the invoice is entered using a transaction input screen into the purchase ledger 13. At step 24 an analysis code is selected. If the nominal analysis code is flagged as account for carbon at step 32 then a carbon transaction pop-up window will be displayed. At step 34 the user selects a unit of measure and enters a quantity. The Carbon quantity in Kg. is calculated at step 36, then at step 26 the appropriate nominal account in the nominal ledger 12 is updated and at step 38 the carbon emission data is updated.

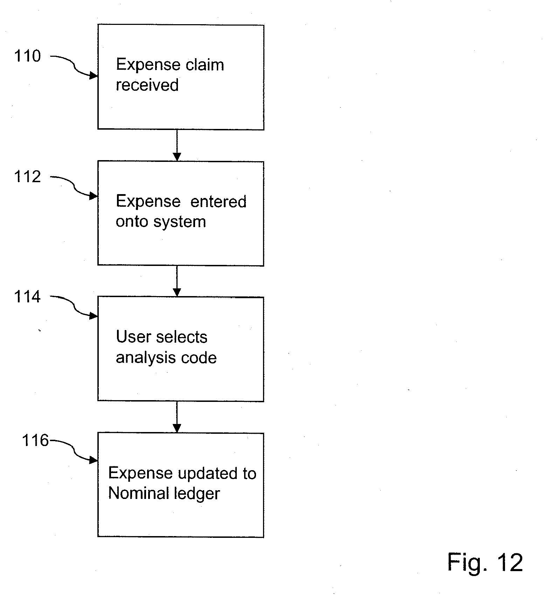

Figure 12 is a flow chart illustrating a conventional expenses transaction. At step 110 an expenses claim is received from an employee. At step 112 the expenses are entered onto the accounting system, At step 114 the expense analysis code is selected and at step 116 the nominal ledger 12 is updated accordingly.

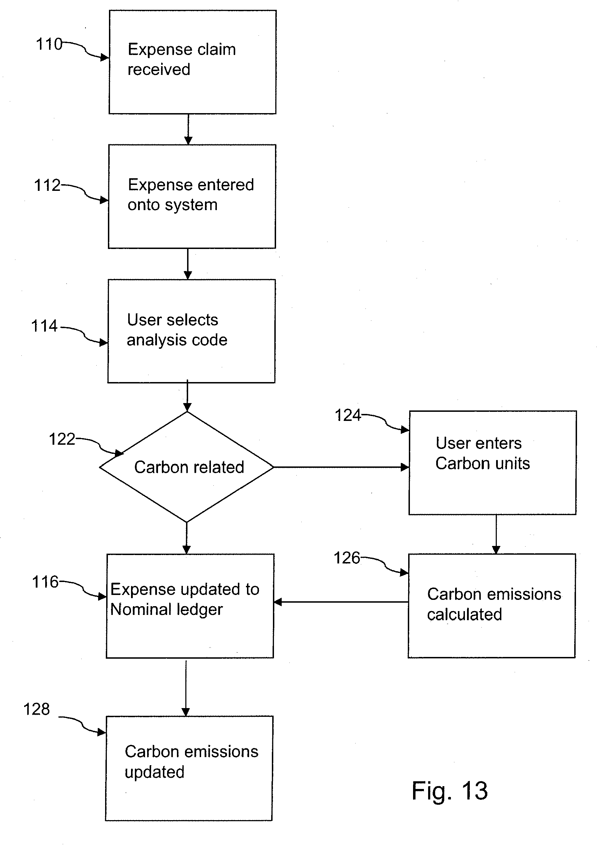

Figure 13 is a flow chart showing an expenses transaction in the system of the present invention when the system wide account_for_carbon flag is enabled.

At step 110 an expenses claim is received from an employee. At step 112 the expenses are entered onto the accounting system, At step 114 the expense analysis code is selected. If the expense analysis code is flagged as account for carbon at step 122 then a carbon transaction pop-up window will be displayed. At step 124 the user selects a unit of measure and enters a quantity. The Carbon quantity in Kg. is calculated at step 126, then at step 116 the appropriate expense account in the nominal ledger 12 is updated and at step 128 the carbon emission data is updated.

There are circumstances where a carbon transaction is to be entered but there is no supporting ledger transaction. In this scenario the user can enter ad-hoc carbon transactions via a carbon transactions entry screen in the nominal ledger. The transaction operates like a journal entry screen. Rather than entering the supplier code / name etc the user can enter free form notes.

The date is taken from the system date and defaults the year/period. There are no restrictions on future period posting or security profile settings. The year period selection can be last year, Current year or next year.

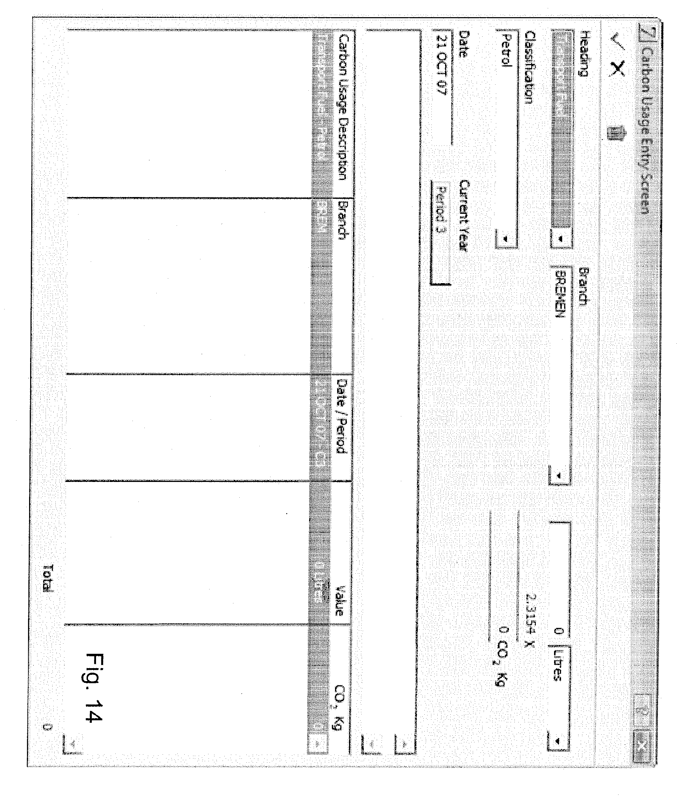

The screen will resemble the one shown for illustration in Figure 14.

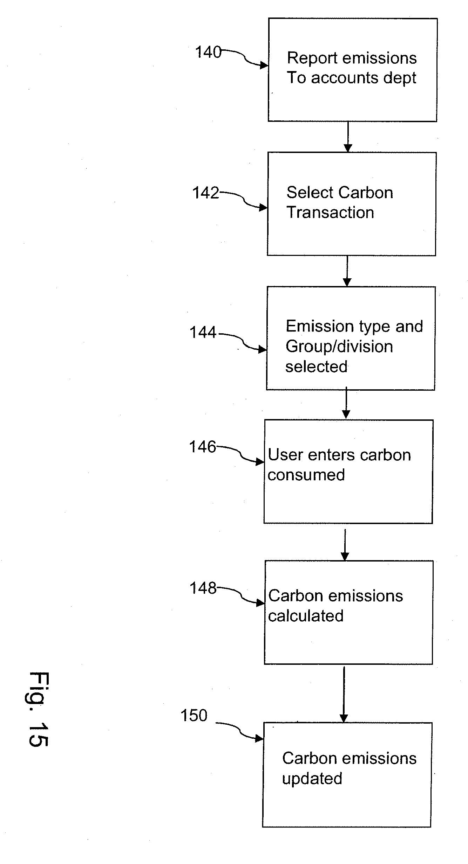

Figure 15 illustrates the steps in the process of entering an ad-hoc carbon transaction.

At step 140 the accounts department receives a green house gas emission report. At step 142 the user selects to enter details for a carbon transaction. At step 144 the emission type is selected and if desired a group and division may be entered for later analysis.

Once the carbon budget store 194 and the carbon transaction data store 195 contain data it is possible to provide carbon usage reports as follows:
Actual vs Budget by Group
Actual vs Budget by Division
Actuals vs Actuals - Year on Year
Budget vs Budgets- Year on Year

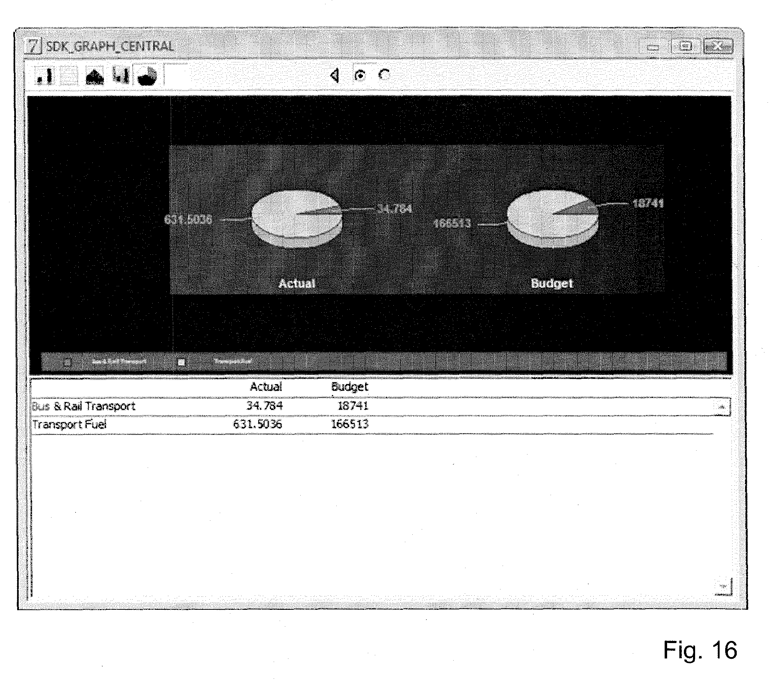

The reports may be viewed either in a text report or visually as illustrated by the screen shot shown in Figure 16.

The data will allow user of the system to compare their carbon emission performance with one another (or with an industry average) by uploading information, for example, to a suitable web based service, about their own carbon emissions and downloading a report which compares their performance to their peers

The user will open the screen and the software will be arranged automatically connect to a web service. The software will download a set of questions and any known data about that user.

For example:
What Industry sector do you operate in?
What size is your office (in square meters)?
How many staff do you have?
How many field based staff do you have?

The user will be able to select emission group data to submit (e.g. just Fuel or perhaps total emissions) and the date range for the data to be reported upon (for example).

The user then submits the data to the service which makes required comparisons required and send back the results. The user can then make instant comparisons to the best, worst and average performers in his market sector. Therefore, each business can judge their carbon outputs in a flexible ways without the need to rekey their data into another system such as a web based calculation tool.

The ability to make these sorts of comparisons is embedded within the core applications and is fully integrated into the data structure. The user can make these comparisons 'on demand' rather than waiting for feedback from a non integrated website.

It will be understood by those skilled in the art that the processes described above may be implemented on a conventional programmable computer, and that a computer program encoding instructions for controlling the programmable computer to perform the above methods may be provided on a computer readable medium.

It will be appreciated that certain features of the invention, which are, for clarity, described in the context of separate embodiments, may also be provided in combination in a single embodiment. Conversely, various features of the invention which are, for brevity, described in the context of a single embodiment, may also be provided separately, or in any suitable combination.

It is to be recognized that various alterations, modifications, and/or additions may be introduced into the constructions and arrangements of parts described above without departing from the scope of the present invention as defined in the appended claims.

## Claims

1. A system for accounting for carbon comprising:
a nominal ledger (12) storing data relating to financial transactions; and
a carbon ledger (195) storing data relating to carbon transactions; a processor (4) arranged in operation to
receive financial data relating to financial transactions and store said financial data in said nominal ledger (12); and
receive emission data relating to carbon transactions and store said emission data in said carbon ledger (195).

2. A system according to claim 1, further comprising a system data store (17) storing data indicating whether accounting for carbon is enabled and in which the processor is arranged to receive said emission data only in the event that accounting for carbon is enabled.

3. A system according to claim 1 or claim 2, further comprising an accounts data store (127) storing a plurality of account records, each account record indicating whether accounting for carbon is required for said account and in which the processor is arranged to receive said emission data only in the event that accounting for carbon enabled for said account.

4. A system according to any one of the preceding claims, further comprising a carbon conversion store (191) storing conversion factors for converting from a plurality of measures of energy usage to a carbon usage measure.

5. A system according to claim 4, in which said conversion factors are downloadable from standard sources on the Internet.

6. A system according to any preceding claim, further comprising a budget data store (194) storing a budget value for emissions and in which the processor is arranged in operation to generate an emission budget report in dependence upon said budget values and data stored in said carbon budget.

7. A method of accounting for carbon emissions using an accounting system in which accounts are labelled as requiring accounting for carbon;
the method comprising the steps of:
receiving an input to select an account;
receiving financial data relating to said account;
storing said financial data in a ledger;
in the event that the account is labelled as requiring accounting for carbon, receiving carbon usage data; and
storing said carbon usage data in a carbon ledger.

8. A method according to claim 7, further comprising the steps of
entering budget data for an account; and
displaying data in dependence upon stored budget information and stored carbon usage data.
